(19) Europäisches Patentamt
European Patent Office
Office européen des brevets

(11) **EP 3 267 159 B1**

(12) **EUROPÄISCHE PATENTSCHRIFT**

(45) Veröffentlichungstag und Bekanntmachung des Hinweises auf die Patenterteilung:
**21.11.2018  Patentblatt 2018/47**

(51) Int Cl.:
***G01F 1/66*** *(2006.01)*

(21) Anmeldenummer: **17176655.3**

(22) Anmeldetag: **19.06.2017**

(54) **ULTRASCHALLMESSVORRICHTUNG UND VERFAHREN ZUM MESSEN DER STRÖMUNGSGESCHWINDIGKEIT EINES FLUIDS IN EINER ROHRLEITUNG**

ULTRASOUND MEASURING DEVICE AND METHOD FOR MEASURING THE FLOW SPEED OF A LIQUID IN A PIPELINE

DISPOSITIF DE MESURE DES ULTRASONS ET PROCÉDÉ DE MESURE DE LA VITESSE D'ÉCOULEMENT D'UN LIQUIDE DANS UN PIPELINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.07.2016  DE 102016112295**

(43) Veröffentlichungstag der Anmeldung:
**10.01.2018  Patentblatt 2018/02**

(73) Patentinhaber: **SICK Engineering GmbH**
**01458 Ottendorf-Okrilla (DE)**

(72) Erfinder:
 • **Dietz, Toralf**
  **01465 Dresden (DE)**
 • **Schlicke, Arnd**
  **01906 Burkau (DE)**
 • **Kirmse, Henri**
  **01309 Dresden (DE)**

(74) Vertreter: **Hehl, Ulrich**
 **SICK AG**
 **Intellectual Property**
 **Erwin-Sick-Strasse 1**
 **79183 Waldkirch (DE)**

(56) Entgegenhaltungen:
 **EP-A1- 2 444 781      DE-A1- 2 936 909**
 **US-A1- 2014 345 391**

EP 3 267 159 B1

**Beschreibung**

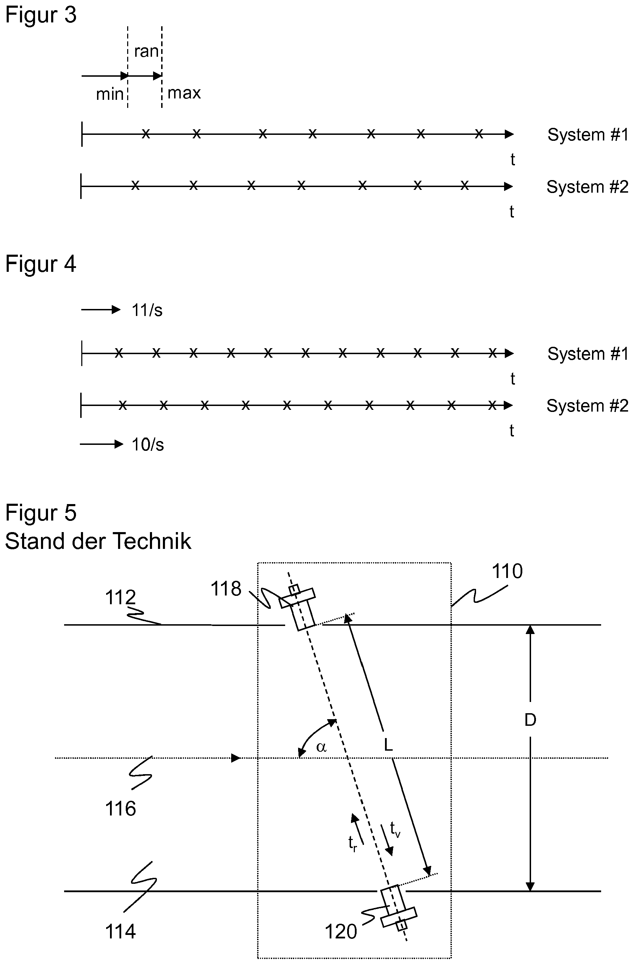

Die Erfindung betrifft eine Ultraschallmessvorrichtung und ein Verfahren zum Messen der Strömungsgeschwindigkeit eines Fluids in einer Rohrleitung nach dem Oberbegriff von Anspruch 1 beziehungsweise Anspruch 11.
Strömungsgeschwindigkeiten in Rohrleitungen und Kanälen können mittels Ultraschallmesstechnik nach dem Differenzlaufzeitverfahren ermittelt werden. Ein wichtiges und anspruchsvolles Anwendungsfeld sind Gaszähler für Erdgaspipelines, wo wegen der immensen beförderten Gasmengen und des Rohstoffwerts schon geringste Abweichungen in der Messgenauigkeit deutlichen merklichen wirtschaftlichen Werten entsprechen.
Ein bekanntes Messprinzip ist in Figur 5 dargestellt. Als wesentlicher Bestandteil einer herkömmlichen Messvorrichtung 110 sind zwei Ultraschallwandler 118, 120 in einem Winkel in der Wandung einer Rohrleitung 112 angeordnet, in der ein Fluid 114 in Pfeilrichtung 116 strömt. Es werden Ultraschallpulse auf dem Messpfad zwischen den Ultraschallwandlern 118, 120 quer zu der Strömung des Fluids ausgesandt und empfangen, wobei die Ultraschallwandler 118, 120 wechselweise als Sender und Empfänger arbeiten. Die durch das Fluid transportierten Ultraschallsignale werden in Strömungsrichtung beschleunigt und gegen die Strömungsrichtung abgebremst. Die resultierende Laufzeitdifferenz wird mit geometrischen Größen zu einer mittleren Strömungsgeschwindigkeit des Fluids verrechnet. Mit der Querschnittsfläche ergibt sich daraus der Betriebsvolumenstrom, welcher beispielsweise bei nach Volumen abgerechnetem Fluid die interessierende Messgröße ist. Die geometrischen Verhältnisse sind durch die folgenden Variablen beschrieben:

$v$: Strömungsgeschwindigkeit des Fluids in der Leitung
$L$: Länge des Messpfades zwischen den beiden Ultraschallwandlern
$a$: Winkel, unter dem die Ultraschallwandler senden und empfangen
$Q$: Volumenstrom
$D$: Durchmesser der Leitung
$0t_v$: Laufzeit des Ultraschalls mit der Strömung
$t_r$: Laufzeit des Ultraschalls gegen die Strömung

Daraus ergeben sich für die gesuchten Größen $v$ und $Q$ folgende Beziehungen:

$$v = L/(2 \cos \alpha) \, (1/t_v - 1/t_r)$$

und

$$Q = v \, 1/4 \, D^2 \, \pi.$$

Auf diese Weise wird demnach die lokale, mittlere Strömungsgeschwindigkeit an der Position des Messpfades bestimmt. Das ergibt aber nur bei gleichmäßigen Strömungen einen genauen Messwert. Deshalb werden für anspruchsvollere Anwendungen mehrere Messpfade auf dem Querschnitt der Rohrleitung geometrisch verteilt. Durch gewichtete Addition der Messwerte der einzelnen Messpfade wird dann ein genauerer Wert für die mittlere Strömungsgeschwindigkeit auf der gesamten Querschnittsfläche ermittelt. Eine Reihe von Messpfadkonfigurationen oder -layouts werden in der Norm ISO17089-1 vorgestellt.

Es sind Ultraschallmessvorrichtungen bekannt, die aus mehreren Subsystemen mit jeweils einem oder mehreren Messpfaden aufgebaut sind. Das reduziert die Komplexität in den einzelnen Subsystemen und sorgt für eine Redundanz. Allerdings kann es zu Signalinterferenzen kommen, welche die Qualität der empfangenen Ultraschallsignale stören.

Eine derartige Messvorrichtung ist aus der EP 2 310 808 B1 bekannt. Sie umfasst eine Vielzahl von Wandlerpaaren, die in zwei Gruppen von je einer Steuerelektronik betrieben werden. Dabei sind die beiden Steuerelektroniken kommunikativ miteinander gekoppelt und koordinieren die Aktivität ihrer Wandlerpaare, so dass die beiden Subsysteme nie gleichzeitig aktiv sind und somit gegenseitige Störungen von Ultraschallmessungen auf den jeweiligen Messpfaden ausgeschlossen werden.

Diese Kommunikation und Synchronisation löst zwar das Problem von Signalinterferenzen, hat jedoch zur Folge, dass immer nur ein Subsystem messen kann. Damit ergibt sich ein streng sequentielles Betriebsregime, das nur die Hälfte der Messzeit pro Subsystem nutzt. Darüber hinaus geht die Redundanz der Systeme verloren, denn bei einem Defekt oder sonstigen Fehlern in einem Subsystem fehlt mit dem Verlust der Kommunikation beziehungsweise Synchronisation auch die notwendige Abstimmung, und damit steht die Funktionstüchtigkeit in Frage.

Die DE 29 36 909 A1 offenbart ein Ultraschall-Strömungsmessgerät mit zwei Paaren akustischer Wandler. Jedem Paar ist eine jeweilige Laufzeit-Messeinrichtung zugeordnet, die Messzeiten festlegt. In einer Ausführungsform ist eine Synchronisierung zwischen den beiden Laufzeit-Messeinrichtungen vorgesehen, damit die elektrischen Impulse der Laufzeit-Messeinrichtungen in der richtigen zeitlichen Beziehung zueinander abgegeben werden. In einer anderen Ausführungsform werden mittels eines monostabilen Multivibrators in beiden Laufzeit-Messeinrichtungen unterschiedliche Zeitdauern $\Delta T$, $\Delta T'$ erzeugt, so dass sich die Messzeiten für beide Paare voneinander unterscheiden.

Die EP 2 444 781 A1 offenbart eine Ultraschalldurchflussmessvorrichtung an einer Rohrleitung mit einem Zweipfad-Messsystem, dessen Messpfad um mindestens den halben Radius der Rohrleitung gegen die Mitte versetzt angeordnet sind. In einer weiteren Ausführungsform sind zwei derartige Zweipfad-Messsysteme vorgesehen.

Aus der US 2014/0345391 A1 ist eine weitere Durchflussmessvorrichtung mit Ultraschall vorgesehen. Dabei besteht die Gefahr, dass die Messungen mit einer pulsierenden Strömungsschwankung synchronisiert sind, welche die Messungen verfälschen. Deshalb wird jede Messung in mehrere Messblocks unterteilt, und die jeweiligen Messergebnisse werden gemittelt. In einer Ausführungsform wird zusätzlich pro Messung eine unterschiedliche Anzahl von Messblocks gewählt.

Es ist daher Aufgabe der Erfindung, die Zuverlässigkeit einer Ultraschallmessvorrichtung aus mehreren Subsystemen zu verbessern.

Diese Aufgabe wird durch eine Ultraschallmessvorrichtung und ein Verfahren zum Messen der Strömungsgeschwindigkeit eines Fluids in einer Rohrleitung nach Anspruch 1 beziehungsweise Anspruch 11 gelöst. Die Ultraschallmessvorrichtung weist ein erstes Messsystem mit mehreren Ultraschallwandlerpaaren mit dazwischen aufgespanntem Messpfad und einer ersten Steuerungseinheit, und ein zweites Messsystem mit mindestens einem, vorzugsweise mehreren Ultraschallwandlerpaaren mit dazwischen aufgespanntem Messpfad und einer zweiten Steuerungseinheit auf. Damit bildet das erste Messsystem einen Mehrpfaddurchflussmesser und das zweite Messsystem einen Ein- oder Mehrpfaddurchflussmesser. Aus den auf einem Messpfad mit Ultraschallsignalen bestimmten Laufzeiten wird die Laufzeitdifferenz und daraus ein Wert für die Strömungsgeschwindigkeit bestimmt. Die Erfindung geht nun von dem Grundgedanken aus, dass der Messbetrieb der beiden Messsysteme autark und unabhängig voneinander ist. Es erfolgt also keine Synchronisation oder Kommunikation zwischen den Steuerungseinheiten, jedenfalls nicht für die Organisation des Messablaufs. Jede Steuereinheit und damit jedes Messsystem hat eine autarke Zeitorganisation für die Messungen auf seinen Messpfaden und legt die Messzeitpunkte selbst fest. Dies geschieht nach einer Vorschrift, die zu einer jeweils unterschiedlichen Abfolge der Messzeitpunkte in den beiden Messsystemen führt. Dabei unterscheiden sich diese Abfolgen vorzugsweise so, dass nach einer zufälligen Kollision, also einer gleichzeitigen oder überlappenden Messung beider Messsysteme, eine weitere Kollision besonders unwahrscheinlich ist beziehungsweise erst nach längerer Zeit oder vielen weiteren Messungen erneut vorkommt.

Die Erfindung hat den Vorteil, dass metrologisch und statistisch unabhängige Mess- oder Subsysteme erreicht werden, welche eine messtechnische Redundanz darstellen. Die Messsysteme unterliegen keinerlei Einschränkungen bezüglich Verfügbarkeit, liefern also eine hohe Informationsdichte, ohne sich gegenseitig zu stören beziehungsweise zu interferieren. Der Verzicht auf eine Synchronisation und Kommunikation reduziert nicht nur den Aufwand, sondern auch die Fehlerwahrscheinlichkeit des Gesamtsystemes, denn so kann es gar nicht zu einem Ausfall der Kommunikation kommen. Damit gibt es echte Redundanz in dem Sinne, dass bei Ausfall eines Messsystems das andere Messsystem unbeeinflusst und deshalb das Gesamtsystem arbeitsfähig bleibt. Die Synchronisation ist durch geeignete Maßnahmen ersetzt, welche deren Vorteile wahren, ohne die Nachteile in Kauf nehmen zu müssen.

Die erste Steuereinheit und/oder die zweite Steuereinheit ist bevorzugt dafür ausgebildet, mindestens einen Messzeitpunkt zufällig festzulegen. Die dadurch zufällig verteilten Messzeitpunkte sorgen dafür, dass zwar möglicherweise einzelne Messungen in den beiden Messsystemen zeitlich überlappen und so Signalinterferenzen entstehen können. Im Gegensatz zu zwei mit identischem Zeitverhalten arbeitenden Messsystemen ist es aber ausgesprochen unwahrscheinlich, dass sich dies häufig wiederholt. Vorzugsweise werden zur Laufzeit Pseudozufallszahlen algorithmisch generiert, wobei beispielsweise durch unterschiedliche Startwerte (Seeds) in den Messsystemen sichergestellt wird, dass sich die Zufallssequenzen unterscheiden. Es aber es ist auch denkbar, jeweils eine Tabelle mit einer Zufallssequenz vorzugeben. Die zufällige Verteilung der Messzeitpunkte ist vorzugsweise auf ein vorgegebenes Zeitintervall eingeschränkt, so dass zwei Messungen einen zeitlichen Mindest- und Höchstabstand voneinander einhalten. Man kann das auch so ausdrücken, dass die Messzeitpunkte gegen ein regelmäßiges Zeitraster zufällig verzögert werden. Es genügt, wenn nur eine der Steuereinheiten ihre Messzeitpunkte zufällig verzögert und die andere Steuereinheit mit regelmäßigen Messzeitpunkten arbeitet.

Die erste Steuereinheit und/oder die zweite Steuereinheit ist bevorzugt dafür ausgebildet, die meisten oder alle Messzeitpunkte zufällig festzulegen. Ansonsten gibt es längere Abfolgen regelmäßiger Messzeitpunkte, die dann im ungünstigen Fall allesamt in beiden Messsystemen überlappen. Diese Regelmäßigkeit wird aufgebrochen, wenn zumindest die meisten Messzeitpunkte zufällig verzögert werden.

Die erste Steuereinheit und die zweite Steuereinheit sind bevorzugt dafür ausgebildet, die Anzahl von Messzeitpunkten je Zeiteinheit in den Messsystemen teilerfremd zueinander festzulegen. In dieser Ausführungsform sind somit innerhalb eines Messsystems die Messzeitpunkte regelmäßig verteilt, jedoch so, dass auf eine Kollision möglichst lange keine weitere Kollision folgt. Dies gelingt beispielsweise durch teilerfremde Anzahlen von Messungen pro Zeiteinheit, beispielsweise zehn Messungen in dem ersten Messsystem und elf Messungen in dem zweiten Messsystem. Im Übrigen können Folgen von Messzeitpunkten in beiden Messsystemen auch unabhängig von Bedingungen wie Regelmäßigkeit oder teilerfremder Anzahl konstruiert werden. Das Ziel dabei ist, zwei Sequenzen aufzufinden, die bei beliebiger gegenseitiger zeitlicher Verschiebung überall möglichst große Lücken zwischen zwei Kollisionen lassen.

Die erste Steuereinheit und/oder die zweite Steuereinheit ist bevorzugt dafür ausgebildet, zumindest einige Messzeitpunkte zusätzlich um eine zufällige Dauer zu verzögern. Hier wird also der Ansatz regelmäßiger, aber unterschiedlicher zeitlicher Abfolgen der Messzeitpunkte mit dem Zufallsansatz kombiniert. Der Zufallsanteil sollte relativ klein bleiben, weil sonst die systematische Entflechtung durch geschickte Wahl regelmäßiger, unterschiedlicher Abfolgen zunichte gemacht wird und effektiv ein rein zufälliges System entsteht.

Die erste Steuereinheit ist erfindungsgemäß dafür ausgebildet, Laufzeitmessungen jeweils in einer Sequenz durch alle Messpfade des zugehörigen Messsystems durchzuführen, wobei die Sequenz zufällig festgelegt ist. Das ist natürlich nur für Messsysteme mit mehreren Messpfaden sinnvoll. Der Störeffekt von Signalinterferenzen hängt von der geometrischen Lage der aktiven Messpfade ab, auf denen eine Kollision entsteht. Somit werden Störeffekte weiter verringert, wenn auch die örtliche Abfolge der Messungen auf den Messpfaden variiert wird. Vorzugsweise wird der Messpfad nicht gänzlich zufällig ausgewählt, sondern beispielsweise durch Ziehen ohne Zurücklegen nur die Abfolge, so dass in einem Messzyklus jeder Messpfad gleich oft genutzt wird. Eine Alternative ist, die Abfolge vorab festzulegen, aber jeweils zufällig auszuwählen, mit welchem Messpfad die Messung innerhalb dieser Abfolge beginnt. Vorzugsweise ist eine übergeordnete Steuerung vorgesehen, die Messwerte der ersten Steuereinheit und der zweiten Steuereinheit erhält und miteinander vergleicht oder verrechnet. Dadurch können Fehler in den Messsystemen aufgedeckt werden. Eine gemeinsame Verrechnung lässt praktisch einen Mehrpfadzähler aus sämtlichen Messpfaden beider Messsysteme entstehen. Dabei kann auch eine der Steuereinheiten die Funktionalität der übergeordneten Steuerung übernehmen. Die Weitergabe von Messergebnissen kann auf beliebiger Verarbeitungsstufe erfolgen, von den rohen Ultraschallsignalen bis hin zu Durchflusswerten. Allerdings werden weiterhin die Messungen selbst nicht zwischen den Messsystemen synchronisiert oder anderweitig abgestimmt, es werden nur Messergebnisse weitergegeben oder ausgetauscht.

Das erste Messsystem und das zweite Messsystem weisen bevorzugt jeweils zwei oder jeweils vier Paare von Ultraschallwandlern und damit zwei oder vier Messpfade auf. Es entsteht ein 2+2-Durchflussmesser oder ein 4+4-Durchflussmesser. Messpfadlayouts mit zwei oder vier Pfaden gleichen sehr gut zwischen Aufwand und Messgenauigkeit aus und sind daher auch als redundante Messsysteme besonders geeignet. Die Messsysteme können aber alternativ auch eine andere Anzahl von Messpfaden aufweisen. Dabei ist auch eine ungleiche Anzahl von Messpfaden wie beispielsweise 4+2 oder 4+1 denkbar.

Vorzugsweise ist mindestens ein drittes Messsystem vorgesehen, das mindestens ein Paar von dritten Ultraschallwandlern, die zwischen einander einen Messpfad aufspannen, sowie eine dritte Steuereinheit aufweist, um Laufzeiten von mit und gegen die Strömung auf dem Messpfad ausgesandtem und empfangenem Ultraschall zu bestimmen. Aus dem Gesamtsystem mit zwei Messsystemen wird somit eines mit drei Messsystemen, wobei diese Verallgemeinerung auf n Messsysteme ausgedehnt werden kann. Sämtliche zu zwei Messsystemen diskutierten Merkmale und Vorteile lassen sich übertragen. Insbesondere sind die Messsysteme hinsichtlich der Organisation ihrer Messungen unabhängig und nicht synchronisiert, und sie legen ihren jeweiligen Messzeitpunkt nach einer der beschriebenen Vorgehensweisen selbst fest. Die Anzahl der Messpfade in jedem Messsystem ist vorzugsweise gleich, um vergleichbare Messwerte zu erhalten, aber davon kann auch abgewichen werden. Je mehr Messsysteme beteiligt sind, desto größer sollte vorzugsweise der mittlere Zeitabstand zwischen zwei Messzeitpunkten gewählt sein, um zufällige Kollisionen zu begrenzen

Das Fluid ist bevorzugt Erdgas, welches nochmals bevorzugt in einer Pipeline strömt. Die Ultraschallmessvorrichtung wird dann also in Großanlagen eingesetzt, beispielsweise für transnationale Erdgaslieferungen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1 eine schematische Draufsicht auf eine Ultraschallmessvorrichtung aus zwei Messsystemen mit jeweils vier Messpfaden;

Fig. 2 eine Querschnittsdarstellung entsprechend Figur 1;

Fig. 3 eine schematische Darstellung der Messzeitpunkte in den beiden Messsystemen bei zusätzlichen zufälligen Verzögerungen;

Fig. 4 eine schematische Darstellung der Messzeitpunkte in den beiden Messsystemen bei teilerfremder Anzahl Messungen pro Zeiteinheit; und

Fig. 5 eine Längsschnittdarstellung einer Ultraschallmessvorrichtung nach dem Stand der Technik zur Erläuterung des Differenzlaufzeitverfahrens.

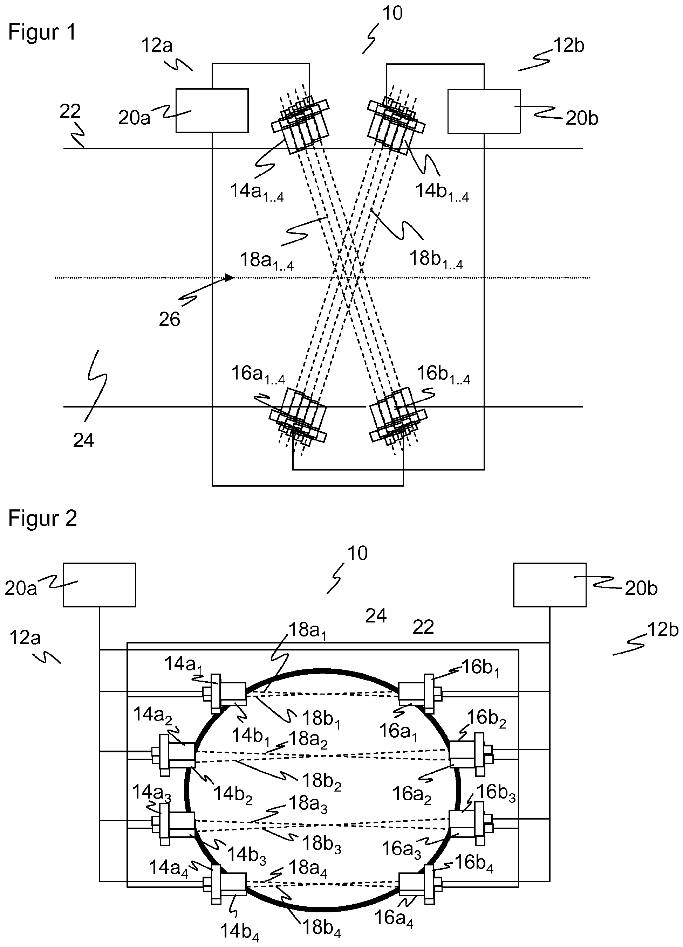

Figur 1 zeigt eine schematische Draufsicht auf eine Ultraschallmessvorrichtung 10 mit zwei Messsystemen 12a-b. Figur 2 zeigt die Ultraschallmessvorrichtung 10 ergänzend in einer Querschnittsdarstellung.

Jedes Messsystem 12a-b weist jeweils vier Paare von Ultraschallwandlern $14a_{1...4}$, $16a_{1...4}$, $14b_{1...4}$,

$16_{b1...4}$ auf, wobei zwischen jedem Paar jeweils ein Messpfad $18a_{1...4}$, $18b_{1...4}$ aufgespannt ist. Die Messsysteme 12a-b umfassen somit jeweils vier Messpfade $18a_{1...4}$, $18b_{1...4}$. Dabei ist die konkrete dargestellte Geometrie sowohl was die Anordnung der Ultraschallwandler $14a_{1...4}$, $16a_{1...4}$, $14b_{1...4}$, $16b_{1...4}$ als auch das Layout der Messpfade $18a_{1...4}$, $18b_{1...4}$ betrifft, rein beispielhaft zu verstehen. Ebenfalls rein beispielhaft ist die Anzahl 4+4 der Messpfade $18a_{1...4}$, $18b_{1...4}$. In einer alternativen Ultraschallmessvorrichtung 10 kann die Anzahl 2+2, 4+2, 4+1 oder nochmals anders gewählt sein.

Weiterhin wird jedes Messsystem 12a-b von einer eigenen Steuereinheit 20a-b angesteuert, wobei die erste Steuereinheit 20a des ersten Messsystems 12a mit den zugehörigen ersten Ultraschallwandlern $14a_{1...4}$, $16a_{1...4}$ verbunden ist und demnach für die zugehörigen Messpfade $18a_{1...4}$ zuständig ist. Ganz entsprechend ist die zweite Steuereinheit 20b des zweiten Messsystems 12b mit den zugehörigen zweiten Ultraschallwandlern $14b_{1...4}$, $16a_{1...4}$ verbunden und für die zugehörigen Messpfade $18b_{1...4}$ zuständig.

Das Grundprinzip der Durchflussmessung ist ultraschallbasierte Differenzlaufzeitverfahren, das einleitend beschrieben wurde. Die Ultraschallmessvorrichtung 10 ist also an einer Rohrleitung 22 montiert, in der ein Fluid 24 in Pfeilrichtung 26 strömt. Es werden Ultraschallsignale auf den jeweiligen im Winkel zur Strömungs- oder Pfeilrichtung 26 angeordneten Messpfaden $18a_{1...4}$, $18b_{1...4}$ mit und gegen die Strömung des Fluids 24 ausgesandt und wieder empfangen und deren Laufzeiten bestimmt. Im Unterschied zu dem schematischen einleitenden Beispiel mit nur einem Messpfad wird hier die Strömungsgeschwindigkeit mehrfach über die verschiedenen Messpfade $18a_{1...4}$, $18b_{1...4}$ bestimmt, so dass für nicht homogene Strömungen ein genaueres Ergebnis für den Volumenstrom erreicht wird.

Durch die Aufteilung in zwei Messsysteme 12a-b ist die dargestellte Ultraschallmessvorrichtung 10 eine redundante 4+4-Messvorrichtung. Um tatsächlich Redundanz zu erreichen, werden die Messabläufe in den beiden Messsystemen 12a-b von der jeweiligen Steuereinheit 12a-b ohne Kommunikation oder Synchronisation gesteuert. Wenn auf höherer Ebene die Messergebnisse der beiden Messsysteme 12a-b kombiniert werden, kann man dies auch als 8-Pfad-Messvorrichtung ansehen.

Dabei gilt es zu vermeiden, dass beide Messsysteme 12a-b gehäuft zu gleichen Zeitpunkten messen und somit wegen Signalinterferenzen eine schlechte Messqualität liefern oder gar nicht mehr messfähig sind. Die Erfindung schlägt dafür verschiedene Maßnahmen vor, die einzeln oder in Kombination eingesetzt werden können.

Eine vollständige Vermeidung von Kollisionen ist ohne Synchronisation nicht möglich. Es kann aber sehr wohl erreicht werden, dass Kollisionen sehr selten sind beziehungsweise nach einer zufälligen Kollision möglichst lange keine weitere Kollision auftritt. Dazu können Sequenzen von Messzeitpunkten vorab festgelegt und in den Steuerungseinheiten 12a-b abgelegt werden, oder alternativ werden Messzeitpunkte zur Laufzeit in den Steuerungseinheiten 12a-b nach geeigneten Vorschriften festgelegt.

Figur 3 illustriert eine erste Ausführungsform. Dabei sind für jedes der Messsysteme Zeitachsen dargestellt, auf denen die Kreuze beispielhafte Messzeitpunkte zeigen. In dieser Ausführungsform erfolgt ein paralleler, gleichzeitiger und unabhängiger Betrieb von gleichartigen Subsystemen ohne Signalinterferenzen beziehungsweise mit stark reduzierten Signalinterferenzen durch stochastische Steuerung der für eine Messung erforderlichen Sende- und Empfangsvorgänge. Konkret wird vor jedem Senden, das die jeweilige Messung einleitet, eine zufällige Wartezeit eingefügt. Damit sind die Messzeitpunkte effektiv zufällig festgelegt. Es ist vorteilhaft, wenn keine beliebige Zufallsauswahl erfolgt, sondern auf einen zeitlichen Mindestabstand zwischen zwei Messungen geachtet wird, weil es sonst zu Signalinterferenzen sogar innerhalb eines Messsystems 12a-b kommen könnte. Man kann dies so ausdrücken, dass einem regelmäßigen Zeitraster eine Zufallsverzögerung hinzugefügt wird. Figur 3 stellt dies als Randbedingung an eine zufällige Zeitspanne zwischen jeweils zwei Messzeitpunkten dar, die zwischen einem Minimal- und einem Maximalwert liegen muss.

Im Beispiel der Figur 3 sind Kollisionen gänzlich vermieden, es liegen also keine Kreuze zeitlich übereinander. Dabei genügt wegen der endlichen Messdauer schon eine ungefähre zeitliche Übereinstimmung für eine Kollision. Aufgrund der zufälligen Festlegung könnte es auch bei weniger günstig getroffenen Zufallswerten nur zu vereinzelten Kollisionen kommen, die für die in der Praxis ständig wiederholte Gesamtmessung unkritisch sind.

Figur 4 illustriert eine weitere Aufführungsform. Hier legen beide Steuerungseinheiten 20a-b die Messzeitpunkte für ihre Messsysteme 12a-b ganz regelmäßig fest, jedoch in beiden Messsystemen 12a-b mit unterschiedlicher Periode, also Zeitdauer zwischen zwei Messungen. Vorteilhaft ist dabei, die Perioden so zu wählen, dass auf eine Kollision möglichst lange keine weitere Kollision folgt, gleichzeitiges Senden also insgesamt extrem unwahrscheinlich wird. Eine Möglichkeit hierfür ist, die Anzahl von Messungen pro Zeiteinheit zueinander teilerfremd zu wählen, beispielsweise zehn Messungen pro Sekunde in dem einen Messsystem 12a-b und elf Messungen pro Sekunde in dem anderen Messsystem 12b-a. Die Teilerfremdheit ist gewährleistet, wenn eine der Raten eine Primzahl ist, aber notwendig ist das nicht, wie das Beispiel acht / neun zeigt.

Eine Koexistenzstrategie der beiden Messsysteme 12a-b kann demnach auf Zufall und systematischen Anteilen basieren, wie zu Figur 3 und 4 erläutert. In einer weiteren Ausführungsform kann dies auch miteinander kombiniert werden. Beispielsweise wählen die Steuerungseinheiten 20a-b die Messzeitpunkte wie in Figur 4 regelmäßig mit jeweils unterschiedlicher Periode und verzögern sie dann zusätzlich um einen zufälligen Anteil. Die zufällige Verzögerung sollte dabei auf kurze Dauern beschränkt sein, denn wenn die Zufallskomponente zu stark wird, kommt der Vorteil des systematischen Anteils gar nicht mehr zum Tragen.

Es ist in allen Ausführungsformen vorteilhaft, wenn nicht nur die zeitliche Abfolge wie dargestellt zufällig ist, sondern auch die Sequenz der Messungen über die Messpfade $18a_{1...4}$, $18b_{1...4}$, da der Effekt von Signalinterferenzen auch eine örtliche Abhängigkeit aufweist.

**Patentansprüche**

1. Ultraschallmessvorrichtung (10) zum Messen der Strömungsgeschwindigkeit eines Fluids (24) in einer Rohrleitung (22),
mit einem ersten Messsystem (12a), das mehrere Paare von ersten Ultraschallwandlern ($14a_{1...4}$, $16a_{1...4}$), die zwischen einander jeweils einen Messpfad ($18a_{1...4}$) aufspannen sowie eine erste Steuereinheit (20a) aufweist, um Laufzeiten von mit und gegen die Strömung auf den Messpfaden ($18a_{1...4}$) ausgesandtem und empfangenem Ultraschall zu bestimmen,
und mit einem zweiten Messsystem (12b), das mindestens ein Paar von zweiten Ultraschallwandlern ($14b_{1...4}$, $16b_{1...4}$),, die zwischen einander einen Messpfad ($18b_{1...4}$) aufspannen sowie eine zweite Steuereinheit (20b) aufweist, um Laufzeiten von mit und gegen die Strömung auf dem Messpfad ($18b_{1...4}$) ausgesandtem und empfangenem Ultraschall zu bestimmen, wobei die erste Steuerungseinheit (20a) und die zweite Steuerungseinheit (20b) jeweils dafür ausgebildet sind, Messzeitpunkte für eine Laufzeitbestimmung auf einem Messpfad ($18a_{1...4}$, $18b_{1...4}$) selbständig und unabhängig voneinander nach einer Vorschrift festzulegen, die zu einer jeweils unterschiedlichen Abfolge der Messzeitpunkte in den beiden Messsystemen (12a-b) führt,
**dadurch gekennzeichnet,**
**dass** die erste Steuereinheit (20a) dafür ausgebildet ist, Laufzeitmessungen in einer Sequenz durch alle Messpfade ($18a_{1...4}$, $18b_{1...4}$) des ersten Messsystems (12a) durchzuführen, wobei die Sequenz zufällig festgelegt ist.

2. Ultraschallmessvorrichtung (10) nach Anspruch 1, wobei die erste Steuereinheit (20a) und/oder die zweite Steuereinheit (20b) dafür ausgebildet ist, mindestens einen Messzeitpunkt zufällig festzulegen.

3. Ultraschallmessvorrichtung (10) nach Anspruch 2, wobei die erste Steuereinheit (20a) und/oder die zweite Steuereinheit (20b) dafür ausgebildet ist, alle Messzeitpunkte zufällig festzulegen.

4. Ultraschallmessvorrichtung (10) nach Anspruch 1, wobei die erste Steuereinheit (20a) und die zweite Steuereinheit (20b) dafür ausgebildet sind, die Anzahl von Messzeitpunkten je Zeiteinheit in den Messsystemen (12a-b) teilerfremd zueinander festzulegen.

5. Ultraschallmessvorrichtung (10) nach Anspruch 4, wobei die erste Steuereinheit (20a) und/oder die zweite Steuereinheit (20b) dafür ausgebildet ist, zumindest einige Messzeitpunkte zusätzlich um eine zufällige Dauer zu verzögern.

6. Ultraschallmessvorrichtung (10) nach einem der vorhergehenden Ansprüche, wobei die zweite Steuereinheit (20b) dafür ausgebildet ist, Laufzeitmessungen in einer Sequenz durch alle Messpfade ($18a_{1...4}$, $18b_{1...4}$) des zweiten Messsystems (12b) durchzuführen, wobei die Sequenz zufällig festgelegt ist.

7. Ultraschallmessvorrichtung (10) nach einem der vorhergehenden Ansprüche, wobei eine übergeordnete Steuerung vorgesehen ist, die Messwerte der ersten Steuereinheit (20a) und der zweiten Steuereinheit (20b) erhält und miteinander vergleicht oder verrechnet.

8. Ultraschallmessvorrichtung (10) nach einem der vorhergehenden Ansprüche, wobei das erste Messsystem (12a) und das zweite Messsystem (12b) jeweils zwei oder jeweils vier Paare von Ultraschallwandlern ($14a_{1...4}$, $16a_{1...4}$, $14b_{1...4}$, $16b_{1...4}$) und damit zwei oder vier Messpfade ($18a_{1...4}$, $18b_{1...4}$) aufweisen.

9. Ultraschallmessvorrichtung (10) nach einem der vorhergehenden Ansprüche, wobei mindestens ein drittes Messsystem vorgesehen ist, das mindestens ein Paar von dritten Ultraschallwandlern, die zwischen einander einen Messpfad aufspannen, sowie eine dritte Steuereinheit aufweist, um Laufzeiten von mit und gegen die Strömung auf dem Messpfad ausgesandtem und empfangenem Ultraschall zu bestimmen.

10. Ultraschallmessvorrichtung (10) nach einem der vorhergehenden Ansprüche, wobei die Rohrleitung (22) eine Pipeline ist.

11. Verfahren zum Messen der Strömungsgeschwindigkeit eines Fluids (24) in einer Rohrleitung (22) mittels einer Ultraschallmessvorrichtung gemäß einem der Ansprüche 1-10, wobei Laufzeiten von mit und gegen die Strömung ausgesandtem und empfangenem Ultraschall auf mehreren Messpfaden ($18a_{1...4}$) eines ersten Messsystems (12a) und auf mindestens einem Messpfad ($18b_{1...4}$) eines zweiten Messsystems (12b) bestimmt werden und aus den Laufzeiten die Strömungsgeschwindigkeit berechnet wird, wobei in den beiden Messsystemen (12a-b) Messzeitpunkte für eine Laufzeitbestimmung auf einem Messpfad ($18a_{1..4}$, $18a_{1..4}$) selbständig und unabhängig voneinander nach einer Vorschrift festgelegt werden, die zu einer jeweils unterschiedlichen Abfolge der Messzeitpunkte in den beiden Messsystemen (12a-b) führt,
**dadurch gekennzeichnet,**
**dass** Laufzeitmessungen in einer Sequenz durch alle Messpfade ($18a_{1..4}$, $18b_{1..4}$) des ersten Messsystems (12a) durchgeführt werden, wobei die Sequenz zufällig festgelegt ist.

**Claims**

1. An ultrasound measuring apparatus (10) for measuring the flow rate of a fluid (24) in a conduit (22), having a first measurement system (12a) comprising multiple pairs of first ultrasound transducers ($14a_{1..4}$, $16a_{1..4}$) that respectively span a measurement path ($18a_{1..4}$) between one another and a first control unit (20a) to determine transit times of ultrasound transmitted and received with and against the flow on the measurement paths ($18a_{1..4}$), and having a second measurement system (12b) comprising at least one pair of second ultrasound transducers ($14b_{1..4}$, $16b_{1..4}$) that span a measurement path ($18b_{1..4}$) between one another and a second control unit (20b) to determine transit times of ultrasound transmitted and received with and against the flow on the measurement path ($18b_{1..4}$),
wherein the first control unit (20a) and the second control unit (20b) are each configured to fix measurement times for a transit time determination on a measurement path ($18a_{1..4}$, $18b_{1..4}$) autonomously and independently of one another in accordance with a rule that produces a respective different sequence of the measurement times in both measurement systems (12a-b),
**characterized in that** the first control unit (20a) is configured to carry out transit time measurements in a sequence through all measurement paths ($18a_{1..4}$, $18b_{1..4}$) of the first measurement system (12a), wherein the sequence is randomly fixed.

2. The ultrasound measurement apparatus (10) in accordance with claim 1, wherein the first control unit (20a) and/or the second control unit (20b) is configured to randomly fix at least one measurement time.

3. The ultrasound measurement apparatus (10) in accordance with claim 2, wherein the first control unit (20a) and/or the second control unit (20b) is configured to randomly fix all the measurement times.

4. The ultrasound measurement apparatus (10) in accordance with claim 1, wherein the first control unit (20a) and the second control (20b) unit are configured to fix the number of measurement times per time unit in the measurement systems (12a-b) coprime with respect to one another.

5. The ultrasound measurement apparatus (10) in accordance with claim 4, wherein the first control unit (20a) and/or the second control unit (20b) is configured to additionally delay at least some measurement times by a random duration.

6. The ultrasound measurement apparatus (10) in accordance with any of the preceding claims,
that the second control unit (20b) is configured to carry out transit time measurements in a sequence through all measurement paths ($18a_{1..4}$, $18b_{1..4}$) of the second measurement system (12b), wherein the sequence is randomly fixed

7. The ultrasound measurement apparatus (10) in accordance with any of the preceding claims,
wherein a higher ranking control is provided that obtains measured values of the first control unit (20a) and of the second control unit (20b) and compares or combines them with one another.

8. The ultrasound measurement apparatus (10) in accordance with any of the preceding claims,
wherein the first measurement system (12a) and the second measurement system (12b) each have a respective two pairs or a respective four pairs of ultrasound transducers ($14a_{1..4}$, $16a_{1..4}$, $14b_{1..4}$, $16b_{1..4}$) and thus two or four measurement paths ($18a_{1..4}$, $18b_{1..4}$).

9. The ultrasound measurement apparatus (10) in accordance with any of the preceding claims,
wherein at least one third measurement system is provided that has at least one pair of third ultrasound transducers that each span a measurement path between each other and that has a third control unit to determine transit times of ultrasound transmitted and received with and against the flow on the measurement path.

10. The ultrasound measurement apparatus (10) in accordance with any of the preceding claims,
wherein the conduit (22) is a pipeline.

11. A method of measuring the flow rate of a fluid (24) in a conduit (22) with an ultrasound measurement apparatus according to any of claims 1 to 10, wherein transit times of ultrasound transmitted and received with and against the flow are determined on multiple measurement paths ($18a_{1..4}$) of a first measurement system (12a) and on at least one measurement path ($18a_{1..4}$) of a second measurement system (12b) and the flow rate is calculated from the transit times, wherein measurement times for a transit time determination are fixed in the two measurement systems (12a-b) on a measurement path ($18a_{1..4}$, $18b_{1..4}$) autonomously and independently of one another in accordance with a rule that produces a respective different sequence of the measurement times in the two measurement systems (12a-b),

**characterized in that** the transit time measurements are carried out in a sequence through all measurement paths ($18a_{1..4}$, $18b_{1..4}$) of the first measurement system (12a), wherein the sequence is randomly fixed.

## Revendications

1. Dispositif de mesure par ultrasons (10) pour mesurer la vitesse d'écoulement d'un fluide (24) dans une conduite tubulaire (22), comportant un premier système de mesure (12a) comprenant plusieurs paires de premiers transducteurs ultrasonores ($14a_{1...4}$, $16a_{1...4}$) qui définissent entre eux un trajet de mesure respectif ($18a_{1...4}$), ainsi qu'une première unité de commande (20a) pour déterminer des temps de parcours des ultrasons émis et reçus avec et à l'encontre de l'écoulement sur les trajets de mesure ($18a_{1...4}$), et

un second système de mesure (12b) comprenant au moins une paire de seconds transducteurs ultrasonores ($14b_{1...4}$, $16b_{1...4}$) qui définissent entre eux un trajet de mesure ($18b_{1...4}$), ainsi qu'une seconde unité de commande (20b) pour déterminer des temps de parcours des ultrasons émis et reçus avec et à l'encontre de l'écoulement sur le trajet de mesure ($18b_{1...4}$), dans lequel

la première unité de commande (20a) et la seconde unité de commande (20b) sont réalisées chacune pour fixer de façon autonome et indépendamment l'un de l'autre des instants de mesure pour une détermination du temps de parcours sur un trajet de mesure ($18a_{1...4}$, $18b_{1...4}$) selon une loi qui mène à une succession respective différente des instants de mesure dans les deux systèmes de mesure (12a - b),

**caractérisé en ce que**

la première unité de commande (20a) est réalisée pour effectuer des mesures de temps de parcours dans une séquence à travers tous les trajets de mesure ($18a_{1...4}$, $18b_{1...4}$) du premier système de mesure (12a), la séquence étant fixée aléatoirement.

2. Dispositif de mesure par ultrasons (10) selon la revendication 1, dans lequel la première unité de commande (20a) et/ou la seconde unité de commande (20b) est réalisée pour fixer aléatoirement au moins un instant de mesure.

3. Dispositif de mesure par ultrasons (10) selon la revendication 2, dans lequel la première unité de commande (20a) et/ou la seconde unité de commande (20b) est réalisée pour fixer aléatoirement tous les instants de mesure.

4. Dispositif de mesure par ultrasons (10) selon la revendication 1, dans lequel la première unité de commande (20a) et la seconde unité de commande (20b) sont réalisées pour fixer le nombre d'instants de mesure par unité de temps dans les systèmes de mesure (12a - b) comme étant premiers l'un par rapport à l'autre.

5. Dispositif de mesure par ultrasons (10) selon la revendication 4, dans lequel la première unité de commande (20a) et/ou la seconde unité de commande (20b) est réalisée pour en supplément retarder d'une durée aléatoire au moins quelques instants de mesure.

6. Dispositif de mesure par ultrasons (10) selon l'une des revendications précédentes, dans lequel la seconde unité de commande (20b) est réalisée pour effectuer des mesures de temps de parcours dans une séquence à travers tous les trajets de mesure ($18a_{1...4}$, $18b_{1...4}$) du second système de mesure (12b), la séquence étant fixée aléatoirement.

7. Dispositif de mesure par ultrasons (10) selon l'une des revendications précédentes, dans lequel il est prévu une commande supérieure qui reçoit des valeurs de mesure de la première unité de commande (20a) et de la seconde unité de commande (20b) et qui les compare l'une à l'autre ou les calcule.

8. Dispositif de mesure par ultrasons (10) selon l'une des revendications précédentes, dans lequel le premier système de mesure (12a) et le second système de mesure (12b) comportent chacun deux ou quatre paires de transducteurs ultrasonores ($14a_{1...4}$, $16a_{1...4}$, $14b1_{...4}$, $16b_{1...4}$) et donc deux ou quatre trajets de mesure ($18a_{1...4}$, $18b_{1...4}$).

9. Dispositif de mesure par ultrasons (10) selon l'une des revendications précédentes, dans lequel il est prévu au moins un troisième système de mesure comprenant au moins une paire de troisièmes transducteurs ultrasonores qui définissent entre eux un trajet de mesure, ainsi qu'une troisième unité de commande pour déterminer des temps de parcours des ultrasons émis et reçus avec et à l'encontre de l'écoulement sur le trajet de mesure.

10. Dispositif de mesure par ultrasons (10) selon l'une des revendications précédentes, dans lequel la conduite tubulaire (22) est un pipeline.

11. Procédé pour mesurer la vitesse d'écoulement d'un fluide (24) dans une conduite tubulaire (22) au moyen d'un dispositif de mesure par ultrasons selon l'une des revendications 1 à 10,

dans lequel on détermine des temps de parcours des ultrasons émis et reçus avec et à l'encontre de l'écoulement sur plusieurs trajets de mesure ($18a_{1...4}$) d'un premier système de mesure (12a) et sur au moins un trajet de mesure ($18b_{1..4}$) d'un second système de mesure (12b), et à partir des temps de parcours on calcule la vitesse d'écoulement,

dans les deux systèmes de mesure (12a - b), on fixe de façon autonome et indépendamment l'un de l'autre des instants de mesure pour une détermination du temps de parcours sur un trajet de mesure ($18a_{1...4}$, $18b_{1...4}$) selon une loi qui mène à une succession respective différentes des instants de mesure dans les deux systèmes de mesure (12a - b), **caractérisé en ce que**

on effectue des mesures de temps de parcours dans une séquence à travers tous les trajets de mesure ($18a_{1...4}$, $18b_{1...4}$) du premier système de mesure (12a), la séquence étant fixée aléatoirement.

Figur 1

Figur 2

## Figur 3

## Figur 4

## Figur 5
## Stand der Technik

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2310808 B1
- DE 2936909 A1
- EP 2444781 A1
- US 20140345391 A1